# EUROPÄISCHE PATENTSCHRIFT

(11) **EP 2 138 281 B1**
(45) Veröffentlichungstag und Bekanntmachung des Hinweises auf die Patenterteilung: **02.03.2011**
(21) Anmeldenummer: 08011659.3
(22) Anmeldetag: 27.06.2008
(51) Int. Cl.: B25J 19/00, F16L 27/087, F16L 39/06

(54) **Drehvorrichtung**
Rotation device
Dispositif rotatif

(43) Veröffentlichungstag der Anmeldung: 30.12.2009
(73) Patentinhaber: FESTO AG & Co. KG, 73734 Esslingen (DE)
(72) Erfinder: Diener, Ulrich, 73732 Esslingen (DE); Chocano, Valentin, 73770 Essligen (DE); Bitzer, Jörg, 73733 Esslingen (DE)
(74) Vertreter: Abel, Martin

(56) Entgegenhaltungen:
- EP-A- 1 832 795
- DE-A1- 4 414 950
- US-A1- 2002 017 785

## Beschreibung

Die Erfindung betrifft eine Drehvorrichtung, mit einem Gehäuse, dass von einer zur Gehäuserückseite und zur Gehäusevorderseite ausmündenden Hohlwellenaufnahme durchsetzt ist, in der sich eine bezüglich dem Gehäuse drehbar und axial unbeweglich gelagerte Hohlwelle erstreckt, wobei an der Gehäuserückseite im Betriebszustand ein mindestens einen Fluideinspeiseanschluss aufweisender Energieeinspeiseblock befestigt ist, in den eine drehbare Energieübertragungsstange hineinragt, die axial von mindestens einem Fluidübertragungskanal durchsetzt ist, der unabhängig von der bezüglich dem Energieeinspeiseblock eingenommenen Drehposition der Energieübertragungsstange innerhalb des Energieeinspeiseblockes mit dem mindestens einen Fluideinspeiseanschluss in Fluidverbindung steht, wobei die Energieübertragungsstange im Betriebszustand drehfest mit der Hohlwelle verbunden ist und sich koaxial in der Hohlwelle erstreckt, und wobei der mindestens eine Fluidübertragungskanal mit einem im Bereich der Gehäusevorderseite angeordneten, im Betriebszustand mitdrehbar mit der Hohlwelle verbundenen Fluidabgabeanschluss kommuniziert.

Eine aus der DE 195 19 939 C1 bekannte Drehvorrichtung dieser Art ist als Antriebsvorrichtung ausgebildet und enthält ein Gehäuse mit internen Antriebsmitteln, die auf eine das Gehäuse durchsetzende Hohlwelle einwirken, um diese rotativ anzutreiben. Diese Drehbewegung kann im Bereich der Gehäusevorderseite an einem Schnittstellenkörper abgegriffen werden, der mit einer Befestigungsschnittstelle ausgestattet ist, an der sich eine rotativ anzutreibende Komponente, beispielsweise ein Greifer, fixieren lässt. Um diese Komponente unabhängig von der Rotationsbewegung der Hohlwelle mit fluidischer Energie versorgen zu können, sitzt an der Gehäuserückseite ein Energieeinspeiseblock, in den eine mit mehreren axialen Fluidübertragungskanälen versehene Energieübertragungsstange lose und drehbar eingreift. Die Energieübertragungsstange ist an dem Schnittstellenkörper befestigt und dadurch drehfest mit der Hohlwelle verbunden. Durch die Fluidübertragungskanäle kann Druckluft von der Rückseite zur Vorderseite der Drehvorrichtung geleitet werden, die über Fluideinspeiseanschlüsse in den Energieeinspeiseblock eingespeist wird und über eine spezielle Abdichteinrichtung drehwinkelunabhängig an die Fluidübertragungskanäle verteilt wird.

Ein Nachteil der bekannten Drehvorrichtung besteht in der aufwändigen Montage. Offensichtlich wird die Energieeinspeisestange von der Vorderseite her eingesteckt, nachdem zuvor rückseitig der Energieeinspeiseblock befestigt wurde.

Auch die EP-A-1 832 795 offenbart eine Vorrichtung gemäß dem Oberbegriff des Patentanspruches 1.

Aus der DE 43 14 628 C1 ist eine Drehvorrichtung bekannt, bei der ein ortsfester Verteilerflansch mit einem hülsenförmigen Abschnitt von der Rückseite her in einen Drehverteiler eingreift, der unter Zwischenschaltung eines Schnittstellenkörpers mit einem Rotor verbunden ist. Diese Drehvorrichtung ist zusätzlich mit Mitteln ausgestattet, die eine Übertragung elektrischer Energie zwischen der Rückseite und der Vorderseite des Gehäuses ermöglichen.

Auch die DE 44 14 950 A1 zeigt einen Drehverteiler, der sowohl fluidische als auch elektrische Verbindungen ermöglicht. Zur Einspeisung von Fluid ist hier das Gehäuse seitlich mit einem Fluideinspeiseanschluss versehen, der mit einer in dem Gehäuse drehbar gelagerten Hohlwelle kommuniziert, durch deren Zentrum gleichzeitig auch elektrische Kabel hindurchgeführt sind.

Aus der DE 82 14 246 U1 ist ein Drehverteiler bekannt, bei dem eine drehbar gelagerte Welle in ein Gehäuse eingreift und über umfangsseitige Nuten verfügt, die zur Fluidübertragung mit mindestens einem Fluidanschluss des Gehäuses in Verbindung stehen. Über Schleifkontakte ist außerdem die zusätzliche Übertragung elektrischer Signale möglich.

Schließlich offenbart die EP 1 470 337 B1 eine Drehvorrichtung, bei der in einem Gehäuse eine Welle drehbar gelagert ist. Kanäle in dem Gehäuse kommunizieren über eine zwischen das Gehäuse und die Welle eingesetzte Kammerdichtung mit Fluidübertragungskanälen innerhalb der Welle.

Es ist die Aufgabe der vorliegenden Erfindung, eine kompakt bauende und einfach zu montierende, zur Energieübertragung geeignete Drehvorrichtung vorzuschlagen.

Zur Lösung dieser Aufgabe ist vorgesehen, dass die Energieübertragungsstange in dem Energieeinspeiseblock drehbar und außerdem axial unbewegbar gelagert ist und gemeinsam mit dem Energieeinspeiseblock Bestandteil einer Energiedurchführungspatrone ist, die als vormontierte Baueinheit von der Gehäuserückseite her derart an das Gehäuse ansetzbar ist, dass die Energieübertragungsstange im Betriebszustand in die Hohlwelle eintaucht.

Eine derartige Drehvorrichtung lässt sich besonders einfach montieren. Einspeiseblock und Energieübertragungsstange bilden allein oder zusammen mit weiteren Komponenten eine als Energiedurchführungspatrone bezeichnete patronenartige Baueinheit, die beim Zusammenbau der Drehvorrichtung als Ganzes rückseitig an das Gehäuse angebaut wird, so dass die Energieübertragungsstange von der Gehäuserückseite her in die Hohlwelle eintaucht. Je nach Länge der Hohlwelle kann die Energiedurchführungspatrone mit einer Energieübertragungsstange entsprechend angepasster Länge ausgestattet sein. Die Lagerung der Energieübertragungsstange in dem Energieeinspeiseblock ist insbesondere so ausgeführt, dass außerhalb des Energieeinspeiseblockes keine weiteren Drehlagerungsmaßnahmen bezüglich der Energieübertragungsstange erforderlich sind.

Vorteilhafte Weiterbildungen der Erfindung gehen aus den Unteransprüchen hervor.

Zweckmäßigerweise beinhaltet der Energieeinspeiseblock einen an der Gehäuserückseite des Gehäuses fixierten Befestigungsabschnitt, von dem ein koaxial zumindest ein Stück weit in die Hohlwelle eintauchender Halsabschnitt wegragt, der die Energieübertragungsstange entlang eines Längenabschnittes umschließt. Der Halsabschnitt kann in vorteilhafter Weise genutzt werden, um Drehlagermittel zur Drehlagerung der Energieübertragungsstange unterzubringen und auf diese Weise eine sehr präzise und robuste Drehlagerung zu ermöglichen.

Der Halsabschnitt eignet sich außerdem zur Nutzung bei der Fluidübertragung zwischen dem Energieeinspeiseblock und der Energieübertragungsstange, und zwar insbesondere dann, wenn die Energieübertragungsstange über mehrere sich axial erstreckende Fluidübertragungskanäle verfügt, die innerhalb des Energieeinspeiseblockes unabhängig voneinander mit Fluid versorgt werden sollen. Zweckmäßigerweise verläuft in der Wandung des Halsabschnittes mindestens ein mit dem mindestens einen Fluideinspeiseanschluss des Energieeinspeiseblockes kommunizierender Fluideinspeisekanal, der im Bereich des Halsabschnittes mit einem Fluidübertragungskanal der Energieübertragungsstange kommuniziert.

Zur voneinander unabhängigen Fluidübertragung kann das Energiedurchführungsrohr mehrere axial verlaufende Fluidübertragungskanäle aufweisen, die jeweils einerseits mit einem eigenen Fluideinspeiseanschluss des Energieeinspeiseblockes und andererseits mit einem im Bereich der Gehäusevorderseite platzierten eigenen Fluidabgabeanschluss kommunizieren. Auf diese Weise lassen sich beispielsweise mehrere im Bereich der Gehäusevorderseite angeordnete, drehfest mit der Hohlwelle verbundene Komponenten unabhängig voneinander fluidisch ansteuern.

Die Drehlagerung der Energieübertragungsstange im Einspeiseblock erfolgt zweckmäßigerweise unter Verwendung von Wälzlagermitteln, insbesondere zwei axial beabstandete Wälzlagereinheiten. Im Vergleich zu einer ebenfalls möglichen Gleitlagerung erweist sich die Wälzlagerung als besonders robust, verschleiß- und reibungsarm. Die Wälzlagermittel können in vorteilhafter Weiterbildung gleichzeitig dazu genutzt werden, die Energieübertragungsstange bezüglich dem Energieeinspeiseblock axial unbeweglich abzustützen. Beispielsweise verfügt die Energieübertragungsstange über eine abgestufte Außenkontur, mit der sie sich an den Wälzlagermitteln abstützen kann.

Besonders kostengünstig ist eine Ausführungsform, bei der die Energieübertragungsstange als stranggepresstes Hohlprofilelement aufgebildet ist, insbesondere aus Aluminiummaterial bestehend, das von mehreren bei der Strangpressherstellung unmittelbar eingeformten Fluidübertragungskanälen axial durchzogen ist. Je nach Anwendungsfall können hierbei nur ein oder auch mehrere Fluidübertragungskanäle zur Fluidübertragung genutzt werden. Die Fluidverbindung zum zugeordneten Fluideinspeiseanschluss und Fluidabgabeanschluss erfolgt zweckmäßigerweise über je mindestens eine zum Außenumfang der Energieübertragungsstange ausmündende Querbohrung. Stirnseitig verschlossen sind die Fluidübertragungskanäle insbesondere durch je ein axial angesetztes, ringförmiges oder scheibenförmiges Dichtungselement, das vorzugsweise durch einen umgebördelten Endbereich der Energieübertragungsstange festgehalten ist.

Zur Fluidübertragung von der Energieübertragungsstange zu dem mindestens einen Fluidabgabeanschluss ist zweckmäßigerweise ein auf den vorderen Endabschnitt der Energieübertragungsstange aufgesetzter Fluidverteilerkopf vorgesehen. An ihm ist der mindestens eine Fluidabgabeanschluss seitlich angeordnet. Der Fluidverteilerkopf ist zweckmäßigerweise auch ein Bestandteil der vormontierten Energiedurchführungspatrone, wobei allerdings die Fluidabgabeanschlüsse zweckmäßigerweise erst nach der Montage der Energiedurchführungspatrone montiert werden.

Jeder Fluidabgabeanschluss ist zweckmäßigerweise an einer Fluidleitungs-Anschlussvorrichtung ausgebildet, die als eigenständiges Bauteil seitlich am Fluidverteilerkopf montierbar ist, insbesondere durch Einschrauben in eine dafür vorgesehene Gewindebohrung. Die montierte Fluidleitungs-Anschlussvorrichtung ragt somit insbesondere in radialer Richtung von der Energieübertragungsstange weg.

Die Drehvorrichtung ist insbesondere ausgebildet, um die Hohlwelle rotativ anzutreiben, so dass eine im Bereich der Gehäusevorderseite an der Hohlwelle angebrachte Komponente, beispielsweise ein Werkzeug, verdrehbar oder verschwenkbar ist. Zur insbesondere lösbaren Montage dieser besagten Komponente ist an der Vorderseite der Hohlwelle zweckmäßigerweise ein mit mindestens einer geeigneten Befestigungsschnittstelle ausgestatteter Schnittstellenkörper angebracht, insbesondere mittels einer Schraubverbindung.

Der Schnittstellenkörper bildet zweckmäßigerweise gemeinsam mit mindestens einer der erwähnten Fluidleitungs-Anschlussvorrichtungen eine Drehmitnahmeeinrichtung, die bewirkt, dass die Energieübertragungsstange die Rotationsbewegung der Hohlwelle mitmacht. In diesem Zusammenhang ist es von Vorteil, wenn der Schnittstellenkörper rückseitig eine axiale Ausnehmung aufweist, in die der drehfest mit der Energieübertragungsstange verbundene Fluidverteilerkopf eintaucht, wobei der Schnittstellenkörper eine der Anzahl der Fluidleitungs-Anschlussvorrichtungen entsprechende Anzahl radialer Durchbrechungen aufweist, in die je eine in dem Fluidverteilerkopf fixierte Fluidleitungs-Anschlussvorrichtung hineinragt, um durch Zusammenwirken mit der Wandung der zugeordneten Durchbrechung eine Drehmitnahme zu bewirken.

Die Fluidübertragung zwischen dem Energieeinspeiseblock und der Energieübertragungsstange erfolgt zweckmäßigerweise dadurch, dass für jeden Fluidübertragungskanal eine die Energieübertragungsstange umschließende Ringkammer vorhanden ist, die zum einen über einen den Einspeiseblock durchziehenden Fluideinspeisekanal mit einem Fluideinspeiseanschluss kommuniziert und die zum anderen über eine Querbohrung der Energieübertragungsstange mit einem Fluidübertragungskanal der Energieübertragungsstange verbunden ist. Da die Querbohrung in jeder Drehposition der Energieübertragungsstange mit der Ringkammer kommuniziert, ist unabhängig von der Drehposition der Energieübertragungsstange eine ständige Fluidverbindung zwischen dem Fluidübertragungskanal und dem zugeordneten Fluideinspeiseanschluss gewährleistet. Die Ringkammer ist zweckmäßigerweise von zwei axial zueinander beabstandeten ringförmigen Dichtelementen begrenzt, die in eine die Energieübertragungsstange koaxial umschließende hohlzylindrische Ausnehmung des Energieeinspeiseblockes eingesteckt sind. Diese Ausnehmung kann sich auch in dem oben erwähnten Halsabschnitt erstrecken, was die Möglichkeit zu einer Unterbringung einer Mehrzahl von Ringkammern bietet, ohne die in Achsrichtung der Hohlwelle gemessenen Abmessungen der Drehvorrichtung unerwünscht zu vergrößern.

Zur Bildung mehrerer mit je einem eigenen Fluideinspeiseanschluss und je einem eigenen Fluidübertragungskanal kommunizierender Ringkammern sind zweckmäßigerweise mehrere axial beabstandete ringförmige Dichtelemente in der hohlzylindrischen Ausnehmung fixiert. Diese Dichtelemente können dann, abgesehen von den äußeren Dichtelementen, jeweils zwei benachbarte Ringkammern gleichzeitig begrenzen. Die ringförmigen Dichtelemente können beispielsweise durch Einpressen individuell in der Ausnehmung des Energieeinspeiseblockes fixiert sein oder können dadurch im gewünschten Abstand zueinander gehalten werden, dass zwischen ihnen geeignete Abstandshalterelemente platziert werden.

In einer vorteilhaften Weiterbildung ist die Drehvorrichtung dahingehend ausgebildet, dass außer einem fluidischem Medium auch elektrische Signale von dem Energieeinspeiseblock zur Gehäusevorderseite übertragbar sind. Hierzu verfügt der Energieeinspeiseblock zweckmäßigerweise über mindestens einen zur Einspeisung elektrischer Signale ausgebildeten Signaleinspeiseanschluss, dessen Anschlusskontakte über eine in dem Energieeinspeiseblock angeordnete Signalübertragungseinrichtung unabhängig von der Drehposition der Energieübertragungsstange mit Signalleitern elektrisch verbunden sind, die axial durch die Energieübertragungsstange hindurch geführt sind. Die Signalleiter führen zu mindestens einem im Bereich der Gehäusevorderseite angeordneten Signalabgabeanschluss, der wie der mindestens eine Fluidabgabeanschluss mit der Energieübertragungsstange bewegungsgekoppelt ist, so dass er dessen Drehbewegung mitmacht. Die Signalleiter erstrecken sich zweckmäßigerweise durch einen zentral in der Energieübertragungsstange verlaufenden Durchgangskanal hindurch, um den herum, in der Umfangsrichtung der Energieübertragungsstange verteilt, mehrere Fluidübertragungskanäle in der Wandung der Energieübertragungsstange angeordnet sein können. Es derart ausgebildete Energieübertragungsstange lässt sich besonders vorteilhaft als stranggepresstes Hohlprofilteil realisieren.

Der Begriff "elektrische Signale" ist im vorliegenden Fall weit auszulegen. Es sind hier nicht nur elektrische Steuersignale gemeint, sondern elektrische Energie jeglichen Verwendungszweckes.

An oder in dem Gehäuse der Drehvorrichtung befinden sich zweckmäßigerweise Antriebsmittel für den rotativen Antrieb der Hohlwelle. Die Antriebsmittel können beispielsweise Komponenten eines Riementriebes oder eines Zahnradgetriebes sein. Die Rotationsbewegung wird zweckmäßigerweise durch einen elektrischen oder fluidischen Antriebsmotor generiert, der in das Gehäuse integriert oder an das Gehäuse angebaut sein kann.

Nachfolgend wird die Erfindung anhand der beiliegenden Zeichnung näher erläutert. In dieser zeigen:
- Figur 1: in perspektivischer Darstellung eine bevorzugte er- ste Ausführungsform einer mit Fluiddurchführungs- maßnahmen ausgestatteten Drehvorrichtung,
- Figur 2: einen Querschnitt durch die Drehvorrichtung aus Fi- gur 1 etwa gemäß Schnittlinie II-II in perspektivi- scher Darstellung,
- Figur 3: den Querschnitt aus Figur 2 in zweidimensionaler Darstellung, wobei zwei strichpunktiert umkreiste Bereiche separat vergrößert abgebildet sind,
- Figur 4: die Drehvorrichtung aus Figur 1 in einer Schnitt- darstellung gemäß Figur 3 vor der Montage, wobei ein vorteilhafter Aufbau einer Energiedurchfüh- rungspatrone ersichtlich ist,
- Figur 5: die Anordnung aus Figur 4 in einer perspektivischen Darstellung,
- Figur 6: in perspektivischer Darstellung eine weitere Aus- führungsform der erfindungsgemäßen Drehvorrichtung, die hier kombiniert mit Maßnahmen zur Fluiddurch- führung und mit Maßnahmen zur Durchführung elektri- scher Signale ausgestattet ist,
- Figur 7: einen Querschnitt durch die Drehvorrichtung aus Fi- gur 6 in perspektivischer Darstellung in einer Schnittebene vergleichbar II-II aus Figur 1, und
- Figur 8: den Querschnitt aus Figur 7 in zweidimensionaler Darstellung.

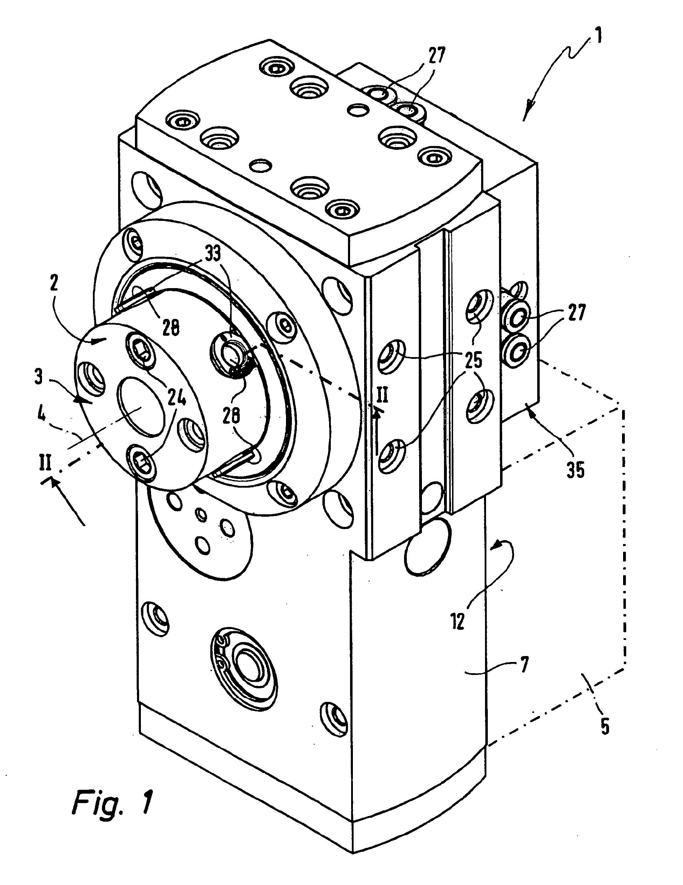

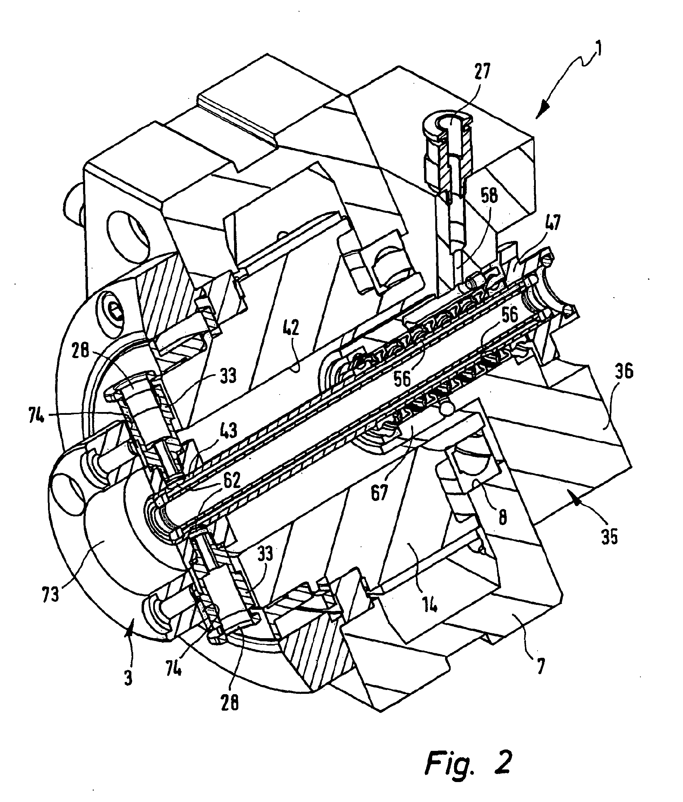

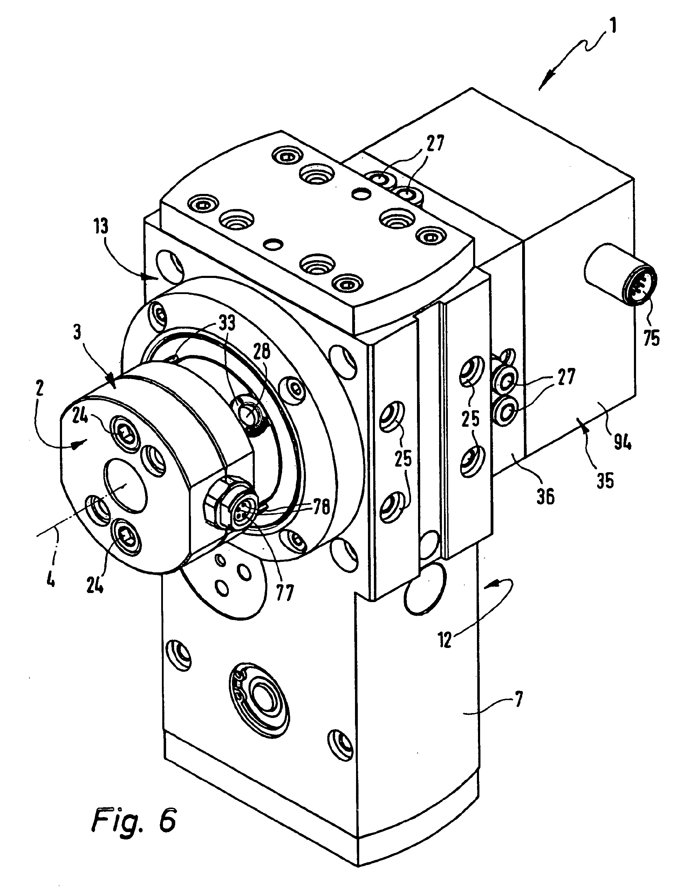

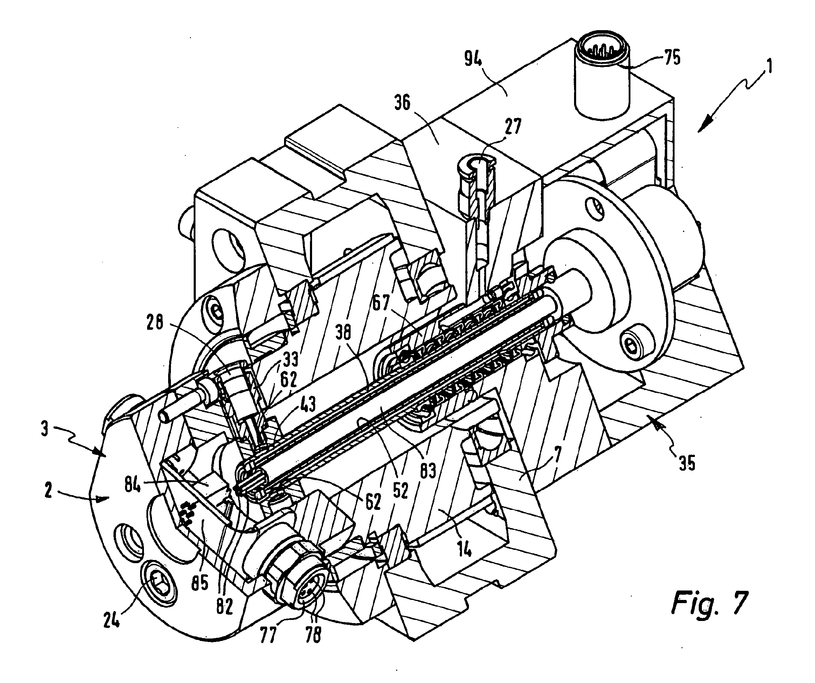

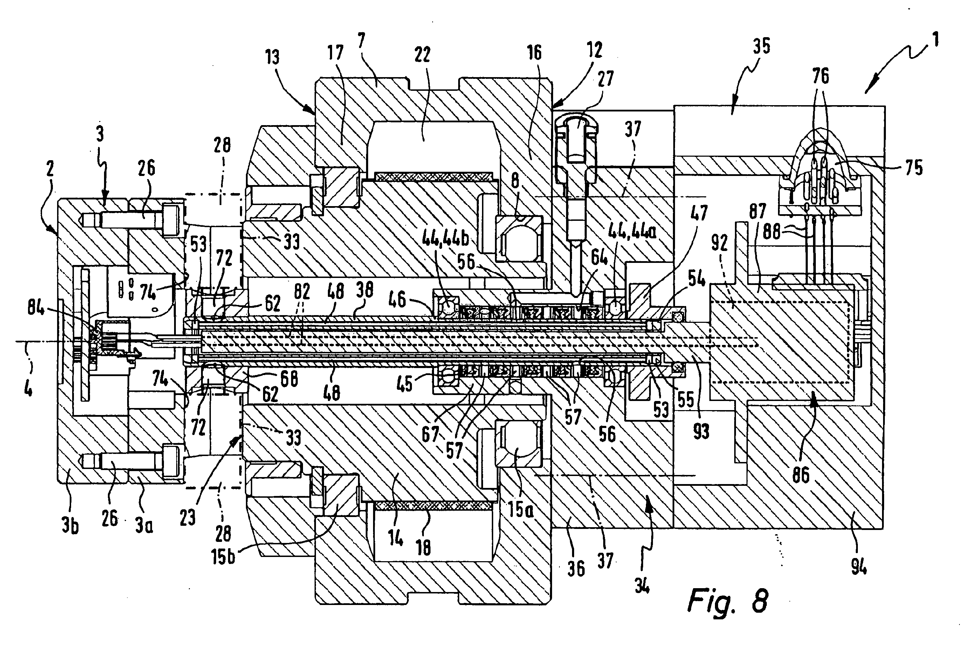

Die Zeichnung zeigt eine insgesamt mit Bezugsziffer 1 bezeichnete Drehvorrichtung in zwei Ausführungsbeispielen, von denen das eine in Figuren 1 bis 5 und das andere in Figuren 6 bis 8 abgebildet ist. In beiden Fällen ist die Drehvorrichtung vorzugsweise als Drehantriebsvorrichtung konzipiert, die in der Lage ist, einen mit einer Befestigungsschnittstelle 2 ausgestatteten Schnittstellenkörper 3 zu einer Rotationsbewegung bezüglich einer als Drehachse fungierenden Hauptachse 4 anzutreiben. Die Antriebsenergie liefert ein fluidischer oder elektrischer oder kombiniert fluidisch-elektrischer Antriebsmotor 5, der lediglich in Figur 1 angedeutet ist und der zweckmäßigerweise Bestandteil der Drehvorrichtung 1 ist.

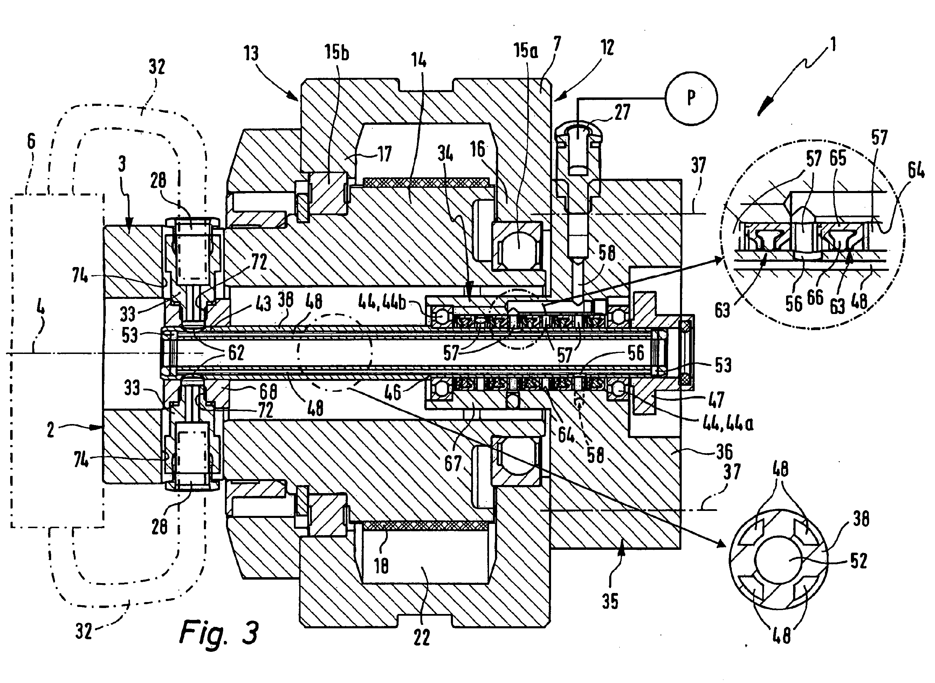

An der Befestigungsschnittstelle 2 lässt sich lösbar eine beliebige, rotativ anzutreibende Komponente fixieren, die in Figur 3 strichpunktiert schematisch bei 6 angedeutet ist. Diese anzutreibende Komponente 6 ist beispielsweise ein Werkzeug, eine Greifvorrichtung oder eine Komponente eines Rundschalttisches.

Die weitere Beschreibung bezieht sich, sofern im Einzelfall nichts anderes ausgesagt wird, auf sämtliche Ausführungsbeispiele.

Die Drehvorrichtung 1 verfügt über ein bevorzugt kastenförmiges Gehäuse 7, insbesondere bestehend aus einem rohrförmigen Hohlkörper und stirnseitig daran angebauten Abschlussdeckeln.

Das Gehäuse 7 ist in Querrichtung von einer Hohlwellenaufnahme 8 durchsetzt, deren Längsachse mit der Hauptachse 4 zusammenfällt und die axial einerseits zu einer Gehäuserückseite 12 und andererseits zu einer Gehäusevorderseite 13 des Gehäuses 7 ausmündet.

In der Hohlwellenaufnahme 8 ist koaxial eine Hohlwelle 14 aufgenommen. Die Hohlwelle 14 ist an dem Gehäuse 7 um ihre Längsachse drehbar gelagert. Zur Lagerung dienen beim Ausführungsbeispiel eine hintere und eine vordere Wälzlagereinheit 15a, 15b, die in die hintere Gehäusewand 16 und in die vordere Gehäusewand 17 eingesetzt sind und die Hohlwelle 14 koaxial umschließen. Unter Mitwirkung dieser Wälzlagereinheiten 15a, 15b ist die Hohlwelle 14 außerdem axial unbeweglich am Gehäuse 7 fixiert.

Die Hohlwelle 14 ist zu einer zweckmäßigerweise winkelmäßig nicht begrenzten Rotationsbewegung um die Hauptachse 4 antreibbar. Der Antrieb findet unter Mitwirkung von Antriebsmitteln 18 statt, über die die Hohlwelle 14 beim Ausführungsbeispiel mit dem Antriebsmotor 5 antriebsmäßig gekoppelt ist. Die Antriebsmittel sind beispielsweise als Riementrieb oder als Zahnradgetriebe ausgebildet und sind in einem von der Hohlwelle 14 durchsetzten Innenraum 22 des Gehäuses 7 aufgenommen. Exemplarisch enthalten die Antriebsmittel 18 einen im Innenraum 22 um die Hohlwelle 14 herumgeschlungenen Antriebszahnriemen.

Die Hohlwelle 14 kann sowohl im Uhrzeigersinn als auch entgegen dem Uhrzeigersinn rotieren. Es ist auch ein Antrieb zu einer hin- und hergehenden Drehbewegung mit sich abwechselnden Drehrichtungen möglich.

Der schon erwähnte Schnittstellenkörper 3 ist an die im Bereich der Gehäusevorderseite 13 zugängliche vordere Stirnfläche 23 der Hohlwelle 14 angesetzt und durch teils nur schematisch angedeutete Befestigungsschrauben 24 in bevorzugt lösbarer Weise drehfest mit der Hohlwelle 14 verbunden. Die Befestigungsschrauben 24 durchsetzen den Schnittstellenkörper 3 in axialer Richtung und greifen in die vordere Stirnfläche 23 der Hohlwelle 14 ein.

Die Betätigung des Antriebsmotors 5 hat somit eine Rotationsbewegung der Hohlwelle 14 und somit auch des Schnittstellenkörpers 3 und der daran angebrachten anzutreibenden Komponente 6 zur Folge.

Am Gehäuse 7 der Drehvorrichtung 1 sind Befestigungsmittel 25 beliebiger Art ausgebildet, über die das Gehäuse 7 an einer nicht weiter abgebildeten Haltestruktur fixiert werden kann, beispielsweise an einem Maschinengestell.

Beim Ausführungsbeispiel der Figuren 1 bis 5 ist der Schnittstellenkörper 3 einteilig ausgebildet. Die Figuren 6 bis 8 zeigen eine Variante mit zweiteiligem Schnittstellenkörper 3, wobei die beiden axial aufeinanderfolgend angeordneten Schnittstellenkörperteile 3a, 3b beispielsweise durch Schrauben 26 lösbar aneinander fixiert sind.

Die Drehvorrichtung 1 ist mit Fluiddurchführungsmaßnahmen ausgestattet, die es ermöglichen, in besonderer Weise ein Fluid vom Bereich der Gehäuserückseite 12 zum Bereich der Gehäusevorderseite 13 durch das Gehäuse 7 und die Hohlwelle 14 hindurchzuführen. Genauer gesagt besteht die Möglichkeit, ein fluidisches Druckmedium in mindestens einen im Bereich der Gehäuserückseite 12 ortfest bezüglich dem Gehäuse 7 angeordneten Fluideinspeiseanschluss 27 einzuspeisen und dieses Fluid dann an mindestens einem im Bereich der Gehäusevorderseite 13 ortsfest bezüglich der Hohlwelle 14 angeordneten Fluidabgabeanschluss 28 abzugreifen. Die Fluidübertragung ist hierbei ungeachtet der Drehbewegung und der momentanen Drehposition der Hohlwelle 14 uneingeschränkt gewährleistet. Auf diese Weise besteht die Möglichkeit, die an dem Schnittstellenkörper 3 angebrachte Komponente 6 trotz ihrer Rotationsbewegung ununterbrochen mit fluidischem Druckmedium aus einem stationären Fluideinspeiseanschluss 27 zu versorgen.

Die Fluideinspeiseanschlüsse 27 können gemeinsam oder unabhängig voneinander mit einer in Figur 3 schematisch angedeuteten Druckquelle P verbunden werden, zweckmäßigerweise unter Zwischenschaltung nicht weiter abgebildeter Steuerventilmittel und vorzugsweise unter Verwendung von Fluidleitungen.

Zur Verbindung der einzelnen Fluidabgabeanschlüsse 28 mit den Komponenten 6 werden zweckmäßigerweise in Figur 3 strichpunktiert angedeutete flexible Fluidleitungen 32 eingesetzt. Jeder Fluidabgabeanschluss 28 ist zweckmäßigerweise Bestandteil einer den lösbaren Anschluss einer Fluidleitung 32 ermöglichenden Fluidleitungs-Anschlussvorrichtung 33, die insbesondere einen lösbaren Steckanschluss der betreffenden Fluidleitung 32 ermöglicht.

Die die Fluiddurchführung ermöglichenden Mittel beinhalten als Hauptkomponente eine als Energiedurchführungspatrone 34 bezeichnete eigenständige Baueinheit, die nach Art einer Patrone von der Gehäuserückseite 12 her zumindest partiell in das Gehäuse 7 und die Hohlwelle 14 eingesetzt und insbesondere eingesteckt ist.

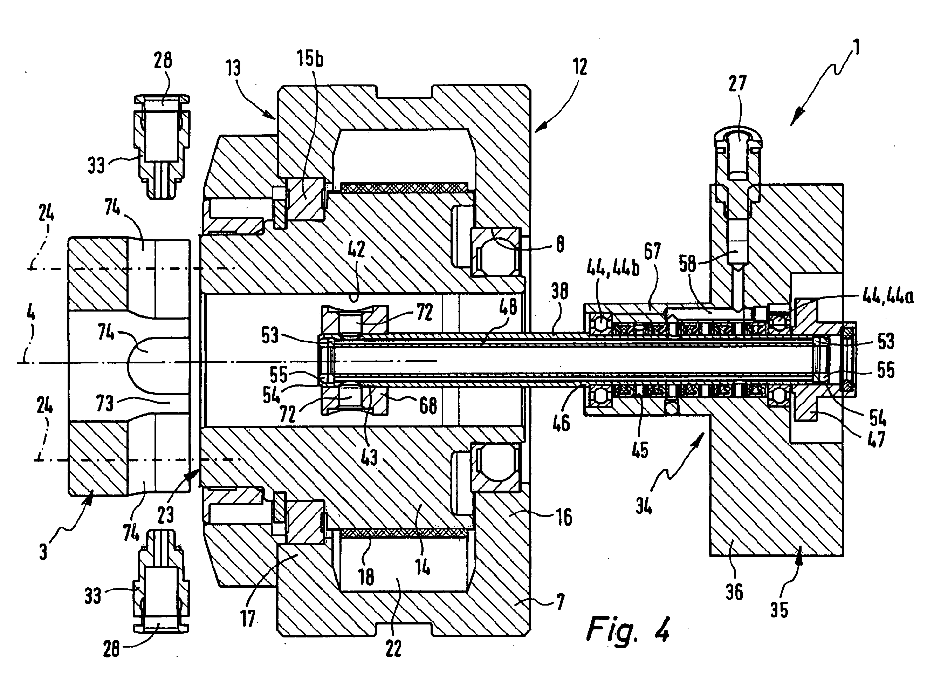

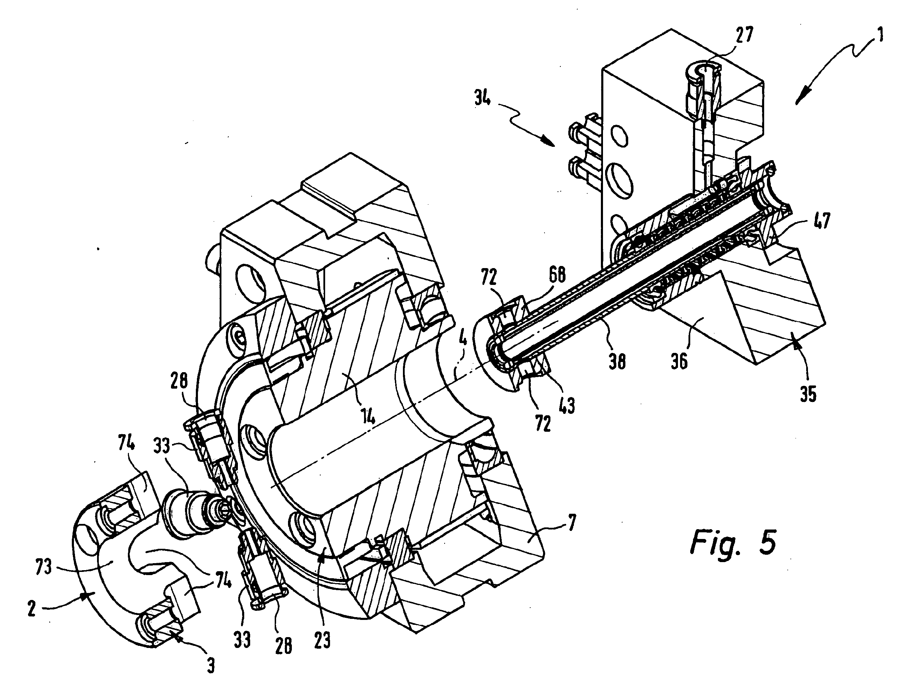

Wie man insbesondere aus Figuren 4 und 5 gut ersehen kann, umfasst die Energiedurchführungspatrone 34 einen rückseitigen Energieeinspeiseblock 35, an dem, insbesondere seitlich, mehrere der schon erwähnten Fluideinspeiseanschlüsse 27 angeordnet sind. Die Fluideinspeiseanschlüsse 27 sind zweckmäßigerweise wie die Fluidabgabeanschlüsse 28 an geeigneten Fluidleitungs-Anschlussvorrichtungen ausgebildet, die an dem Energieeinspeiseblock 35 befestigt sind.

Der Energieeinspeiseblock 35 verfügt über einen insbesondere flanschartig ausgebildeten Befestigungsabschnitt 36, der bei montierter Energiedurchführungspatrone 34 an der rückseitigen Gehäusefläche des Gehäuses 7 anliegt und über schematisch angedeutete Befestigungsschrauben 37 lösbar fest mit dem Gehäuse 7 verbunden ist.

Die Energiedurchführungspatrone 34 beinhaltet außerdem ein zur Energiedurchführung genutztes stangenförmiges Bauteil, das als Energieübertragungsstange 38 bezeichnet sei. Die Energieübertragungsstange 38 taucht mit ihrem rückseitigen Endabschnitt in den Energieeinspeiseblock 35 hinein und ist in dem Energieeinspeiseblock 35 derart drehbar gelagert, dass sie um ihre Längsachse rotieren kann. Der vordere Endabschnitt der Energieübertragungsstange 38 ragt vorne in axialer Richtung aus dem Energieeinspeiseblock 35 heraus.

Bei installierter Energiedurchführungspatrone 34 taucht die Energieübertragungsstange 38 von der Gehäuserückseite 12 her in koaxialer Anordnung in den Hohlwellen-Innenraum 42 ein. Exemplarisch ist die Energieübertragungsstange 38 derart lang ausgebildet, dass sie die Hohlwelle 14 vollständig durchsetzt und mit ihrem Kopfabschnitt 43 vorne aus dem Hohlwellen-Innenraum 42 hinausragt.

Die Energieübertragungsstange 38 ist in dem Energieeinspeiseblock 35 nicht nur drehbar gelagert, sondern außerdem axial unbewegbar fixiert. Darauf basiert der Charakter der patronenartigen Baueinheit. Beide Komponenten können beliebig gehandhabt werden, ohne auseinanderzufallen. Die Energiedurchführungspatrone 34 kann in einem einzigen Vorgang als fest zusammenhängende Baugruppe an das Gehäuse 7 angesetzt werden, wobei die Energieübertragungsstange 38 bei diesem Ansetzen in die Hohlwelle 14 eingeführt wird.

Nachdem der Befestigungsabschnitt 36 am Gehäuse 7 fixiert ist, ergibt sich automatisch auch eine entsprechende Fixierung der Energieübertragungsstange 38.

Zur Lagerung der Energieübertragungsstange 38 in der Energiedurchführungspatrone 34 kommen beim Ausführungsbeispiel Wälzlagermittel 44 zum Einsatz. Es sind insbesondere zwei mit axialem Abstand zueinander angeordnete Wälzlagereinheiten 44a, 44b vorhanden, die in einer axialen Ausnehmung 45 des Energieeinspeiseblockes 35 konzentrisch zwischen der Energieübertragungsstange 38 und dem Energieeinspeiseblock 35 angeordnet sind.

Die axiale Abstützung zur Rückseite hin erfolgt mittels einer durch eine Abstufung des Außenumfanges der Energieübertragungsstange 38 ausgebildete ringförmige Anschlagschulter 46, die sich von vorne her an der vorderen Wälzlagereinheit 44b abstützt. Zur Abstützung nach vorne hin ist auf den nach hinten aus der hinteren Wälzlagereinheit 44a herausragenden Endabschnitt der Energieübertragungsstange 38 ein Anschlagring 47 aufgesetzt und beispielsweise durch Verkleben oder Aufschrauben fixiert, der sich von hinten her an der rückseitigen Wälzlagereinheit 44a abstützt.

Die Wälzlagermittel 44 werden beim Ausführungsbeispiel also sowohl zur Drehlagerung als auch zur axialen Fixierung der Energieübertragungsstange 38 genutzt.

Die Energieübertragungsstange 38 ist von zweckmäßigerweise mehreren sich in Achsrichtung der Hauptachse 4 erstreckenden Fluidübertragungskanälen 48 axial durchsetzt. Aus dem vergrößerten Detailquerschnitt unten rechts in Figur 3 ist ersichtlich, dass die Fluidübertragungskanäle 48 zweckmäßigerweise in der Umfangsrichtung der Energieübertragungsstange 38 um das Stangenzentrum herum verteilt angeordnet sind. Dies lässt sich besonders vorteilhaft realisieren, indem die Energieübertragungsstange 38 in Form eines stranggepressten Hohlprofilelementes ausgebildet ist, bei dessen Herstellung die Fluidübertragungskanäle 48 direkt eingeformt werden.

Zweckmäßigerweise ist die Energieübertragungsstange 38 auch noch von einem zentralen Durchgangskanal 52 durchsetzt, auf den später noch eingegangen wird und um den herum die Fluidübertragungskanäle 48 in der Wandung der Energieübertragungsstange 38 ausgebildet sind. Die Ausgestaltung als stranggepresstes Hohlprofilelement erlaubt eine einfache Variation der Länge zur Anpassung an unterschiedliche Querabmessungen der Drehvorrichtung 1.

Die Fluidübertragungskanäle 48 sind an beiden Stirnseiten dicht verschlossen. Hierzu verfügt die Energieübertragungsstange 38 an beiden Stirnseiten über eine sacklochartige Vertiefung, in die ein vor den Mündungen der Fluidübertragungskanäle 48 zu liegen kommendes ringförmiges Dichtelement 53 eingesetzt ist, das durch den umgebördelten Endbereich 54 der Energieübertragungsstange 38 festgehalten und unter Abdichtung axial gegen die Kanalmündungen gedrückt wird. Damit die Dichtelemente 53 nicht beschädigt werden, kann zwischen ihnen und dem umgebördelten Endbereich 54 jeweils noch ein aus einem harten Material wie Metall bestehender Zwischenring 55 eingesetzt sein.

Der zentrale Durchgangskanal 52 wird durch das Dichtelement 53 nicht verschlossen.

Durch die Fluidübertragungskanäle 48 hindurch wird das eingespeiste Fluid von den Fluideinspeiseanschlüssen 27 zu den Fluidabgabeanschlüssen 28 transportiert. Hierzu steht jeder Fluidübertragungskanal 48 im Innern des Energieeinspeiseblokkes 35 über eine die Wandung der Energieübertragungsstange 38 durchsetzende Querbohrung 56 mit einer Ringkammer 57 in Fluidverbindung, die innerhalb des Energieeinspeiseblocks 35 konzentrisch um die Energieübertragungsstange 38 herum angeordnet ist.

Um die Energieübertragungsstange 38 herum sind mehrere mit axialem Abstand zueinander angeordnete und gegeneinander abgedichtete Ringkammern 57 angeordnet, deren Anzahl der Anzahl der Fluidübertragungskanäle 48 entspricht. Die von den Fluidübertragungskanälen 48 ausgehenden Querbohrungen 56 sind axial gestaffelt, so dass jeder Fluidübertragungskanal 48 über die ihm zugeordnete Querbohrung 56 ausschließlich mit einer eigenen Ringkammer 57 kommuniziert.

Von jeder Ringkammer 57 geht ein eigener Fluideinspeisekanal 58 ab, der den Energieeinspeiseblock 35 durchzieht und zu einem der Fluideinspeiseanschlüsse 27 führt.

Wenn die Energieübertragungsstange 38 rotiert, bewegen sich die an ihrem Außenumfang angeordneten Querbohrungen 56 ausschließlich in stets der gleichen Ringkammer 57, so dass ungeachtet der jeweiligen Drehposition eine Fluidverbindung zwischen jedem Fluidübertragungskanal 48 und der ihm zugeordneten Ringkammer 57 gegeben ist. Folglich gelangt das über die Fluideinspeiseanschlüsse 27 eingespeiste Fluid auch bei Rotation der Energieübertragungsstange 38 stets ohne Unterbrechung in den zugeordneten Fluidübertragungskanal 48.

Jeder Fluidübertragungskanal 48 kommuniziert im Bereich der Gehäusevorderseite 13 mit einem der Fluidabgabeanschlüsse 28. Hierzu ist die Energieübertragungsstange 38 im Bereich ihres Kopfabschnittes 43 mit über den Umfang verteilten weiteren Querbohrungen 62 versehen, die von jeweils einem der Fluidübertragungskanäle 48 ausgehen und mit je einem der die Rotation der Stange mitmachenden Fluidabgabeanschlüsse 28 verbunden sind.

Zur Bildung der mehreren Ringkammern 57 sind in der axialen Aufnahme 45 des Energieeinspeiseblockes 35 mehrere axial beabstandete, die Energieübertragungsstange 38 konzentrisch umschließende ringförmige Dichtelemente 63 angeordnet, die die axialen Begrenzungswände der Ringkammern 57 bilden. Vorzugsweise sitzen diese ringförmigen Dichtelemente 63 in einer einen größeren Durchmesser als die Energieübertragungsstange 38 aufweisenden hohlzylindrischen Aufnahme 64 des Energieeinspeiseblockes 35, die von einem Längenabschnitt der axialen Aufnahme 45 gebildet ist und zweckmäßigerweise axial beidseits von den beiden Wälzlagereinheiten 44a, 44b begrenzt ist.

Die ringförmigen Dichtelemente 63 sind zweckmäßigerweise individuelle Elemente, die untereinander nicht fest verbunden sind. Exemplarisch sind sie unter Einhaltung des gewünschten Abstandes in die hohlzylindrische Aufnahme 64 eingepresst. Sie können hierzu ein aus der vergrößerten Detailabbildung der Figur 3 ersichtliches, im Querschnitt U-förmiges Gehäuseteil 65 enthalten, das im Presssitz an der Innenumfangsfläche der hohlzylindrischen Aufnahme 64 fixiert ist und das einen aus gummielastischem Material bestehenden Dichtungsring 66 enthält, der dynamisch dichtend, also mit Gleitkontakt, am Außenumfang der Energieübertragungsstange 38 anliegt. Bei der Rotation der Energieübertragungsstange 38 sind die ringförmigen Dichtelemente 63 also stationär.

Abgesehen von den beiden äußeren Dichtelementen 63 bilden die anderen Dichtelemente 63 jeweils eine Trennwand für gleichzeitig zwei axial benachbarte Ringkammern 57.

Bei einer alternativen Ausführungsform sind die ringförmigen Dichtelemente 63 nur lose in die hohlzylindrische Aufnahme 64 eingeschoben und werden durch zwischen ihnen angeordnete Abstandshalteelemente so auf Abstand gehalten, dass sich die Ringkammern 57 ergeben.

Damit die Querabmessungen der Drehvorrichtung durch den Energieeinspeiseblock 35 nicht unnötig vergrößert werden, schließt sich zweckmäßigerweise vorne an den oben erwähnten Befestigungsabschnitt 36 ein bevorzugt hohlzylindrischer Halsabschnitt 67 an, der die Energieübertragungsstange 38 im Anschluss an den Befestigungsabschnitt 36 entlang eines Teils ihrer Länge koaxial umschließt und bei montierter Energiedurchführungspatrone 34 von der Gehäuserückseite 12 her zumindest ein Stück weit koaxial in den Hohlwellen-Innenraum 42 eintaucht. Indem sich nun die die Ringkammern 57 enthaltende hohlzylindrische Aufnahme 64 nicht nur im Innern des Befestigungsabschnittes 36 erstreckt, sondern auch im Innern des Halsabschnittes 67, können größere Bereiche der zur Fluidübertragung verwendeten Maßnahmen ins Innere des Gehäuses 7 und der Hohlwelle 14 verlagert werden.

Der Befestigungsabschnitt 36 und der Halsabschnitt 67 sind zweckmäßigerweise einstückig miteinander ausgebildet.

Derjenige mindestens eine Fluideinspeisekanal 58, der mit einer in dem Halsabschnitt 67 angeordneten Ringkammer 57 kommuniziert, erstreckt sich zumindest teilweise in der Wandung des Halsabschnittes 67.

Zweckmäßigerweise ragt der Halsabschnitt 67 mit allseitigem radialem Abstand in die Hohlwelle 14 hinein, so dass letztere sich ungehindert bezüglich dem ortsfest mit dem Gehäuse 7 verbundenen Halsabschnitt 67 drehen kann.

Für die Fluidverbindung zwischen den Fluidübertragungskanälen 48 und den Fluid-Abgabeanschlüssen 28 trägt die Energieübertragungsstange 38 zweckmäßigerweise auf ihrem Kopfabschnitt 43 einen Fluidverteilerkopf 68. Dieser ist drehfest an der Energieübertragungsstange 38 fixiert, insbesondere durch eine Klebeverbindung. Die Klebeverbindung bewirkt eine gleichzeitige Abdichtung des Überganges zwischen den auf gleicher axialer Höhe mit dem Fluidverteilerkopf 68 angeordneten weiteren Querbohrungen 62 und sich in dem Fluidverteilerkopf 68 radial erstreckenden Fluidabgabekanälen 72, die mit jeweils einer der weiteren Querbohrungen 62 fluchtend ausgerichtet sind. Alternativ wäre es allerdings auch möglich, den Fluidverteilerkopf 68 anderweitig zu fixieren und gesonderte Dichtungselemente einzusetzen.

Der insbesondere koaxial auf die Energieübertragungsstange 68 aufgesetzte Fluidverteilerkopf 68 bildet einen Träger für die oben erwähnten Fluidleitungs-Anschlussvorrichtungen 33. Letztere sind zweckmäßigerweise in den Fluidabgabekanälen 72 fixiert, beispielsweise durch Einpressen oder durch Einschrauben. Die derart am Fluidverteilerkopf 68 befestigten Fluidleitungs-Anschluss-vorrichtungen 33 ragen seitlich, insbesondere in radialer Richtung, von dem Fluidverteilerkopf 68 weg, wobei sich eine regelmäßige Verteilung entlang des Umfanges der Energieübertragungsstange 38 empfiehlt.

Der Fluidverteilerkopf 68 ist zweckmäßigerweise ein Bestandteil der Energiedurchführungspatrone 64 und wird folglich bei deren Montage von der Gehäuserückseite her durch die Hohlwelle 14 hindurchgeführt. Im montierten Zustand nimmt er eine Position unmittelbar axial vor der Hohlwelle 14 ein.

Die Energieübertragungsstange 38 soll sich synchron mit der Hohlwelle drehen. Die hierzu beim Ausführungsbeispiel vorhandene Drehmitnahmeeinrichtung besteht in vorteilhafter Weise aus den Fluidleitungs-Anschlussvorrichtungen 33 und dem Schnittstellenkörper 3.

Genauer gesagt verfügt der Schnittstellenkörper 3 im zentralen Bereich über eine zur Hohlwelle 14 hin offene axiale Ausnehmung 73, in die der Fluidverteilerkopf 68 eintaucht. Von der axialen Ausnehmung 73 gehen mehrere entlang ihres Umfanges verteile radiale Durchbrechungen 74 aus, deren Umfangsverteilung derjenigen der Fluidleitungs-Anschlussvorrichtungen 33 entspricht. Somit ragt in jede radiale Durchbrechung 74 eine der Fluidleitungs-Anschlussvorrichtungen 33 hinein, wobei der Bereich des Fluidabgabeanschlusses 28 zweckmäßigerweise im Bereich des Außenumfanges des Schnittstellenkörpers 3 liegt.

Die Querschnitte der radialen Durchbrechungen 74 sind so auf die Querschnitte der Fluidleitungs-Anschlussvorrichtungen 33 abgestimmt, dass sich die Fluideinspeiseanschlüsse 27 mit möglichst wenig oder ohne Spielraum an den in der Drehrichtung der Hohlwelle 14 orientierten Wandungsabschnitten der radialen Durchbrechungen 74 abstützen können. Wird also die Hohlwelle 14 verdreht und dreht sich damit auch der Schnittstellenkörper 3, werden die Fluidleitungs-Anschlussvorrichtungen 33 von den Wandungen der radialen Durchbrechungen 74 beaufschlagt und mitgenommen, so dass über die Fluidleitungs-Anschluss-vorrichtungen 33 ein Drehmoment in die Energieübertragungsstange 38 eingeleitet wird.

Die radialen Durchbrechungen 74 sind zweckmäßigerweise axial, zur Hohlwelle 14 hin, offen. Dies erlaubt ein Ansetzen des Schnittstellenkörpers 3 an die Hohlwelle 14, nachdem zuvor bereits die Fluidleitungs-Anschlussvorrichtungen 33 an dem Fluidverteilerkopf 68 angebracht worden sind. Letzteres geschieht, nachdem die Energiedurchführungspatrone 64 montiert wurde, da der Hohlwellen-Innenraum 42 zu klein ist, um ein Hindurchführen des bereits mit den Fluidleitungs-Anschlussvorrichtungen 33 bestückten Fluidverteilerkopfes 68 zu ermöglichen.

Die Drehvorrichtung gemäß Figuren 6 bis 8 unterscheidet sich vom Ausführungsbeispiel der Figuren 1 bis 5 durch zusätzliche Maßnahmen bezüglich der Durchführung elektrischer Signale durch das Gehäuse 7 und die Hohlwelle 14.

Der Energieeinspeiseblock 35 ist zusätzlich zu den Fluideinspeiseanschlüssen 27 mit mindestens einem Signaleinspeiseanschluss 75 ausgestattet, über den elektrische Signale einschließlich elektrischer Versorgungsenergie eingespeist werden können. Der Signaleinspeiseanschluss 75 verfügt zu diesem Zweck über eine entsprechende Anzahl geeigneter Anschlusskontakte 76.

Im Bereich der Gehäusevorderseite 13, an dem dort befindlichen Schnittstellenkörper 3, ist mindestens ein Signalabgabeanschluss 77 angeordnet, der wie die Fluidabgabeanschlüsse 28 die Drehbewegung des Schnittstellenkörpers 3 mitmacht und der ebenfalls mit elektrischen Anschlusskontakten 78 zur Signalabgabe ausgestattet ist.

Die Anschlusskontakte 78 des Signalabgabeanschlusses 77 sind fest mit insbesondere in Form von Drähten ausgebildeten elektrischen Signalleitern 52 verbunden, die sich axial durch die Energieübertragungsstange 38 hindurch erstrecken. Vorzugsweise sind die Signalleiter 82 in dem oben erwähnten zentralen Durchgangskanal 52 verlegt, wobei sie insbesondere von den Adern eines ummantelten Signalübertragungskabels 83 gebildet sind, das sich in dem zentralen Durchgangskanal 52 erstreckt.

Die Verbindung zwischen den elektrischen Signalleitern 82 und den Anschlusskontakten 78 erfolgt zweckmäßigerweise im Innern des Schnittstellenkörpers 3 mittels mindestens einer geeigneten Steckvorrichtung 84. Letztere sitzt zweckmäßigerweise an einer im Schnittstellenkörper 3 untergebrachten Leiterplattenanordnung 85, die mit den Anschlusskontakten 8 verbunden ist. Die beim Ausführungsbeispiel zweiteilige Ausbildung des Schnittstellenkörpers 3 vereinfacht die elektrischen Anschlussmaßnahmen im Innern des Schnittstellenkörpers 3.

Die ständige elektrische Verbindung zwischen den elektrischen Signalleitern 82 und den Anschlusskontakten 76 des Signaleinspeiseanschlusses 75 gewährleistet eine im Innern des Energieeinspeiseblockes 35 untergebrachte Signalübertragungseinrichtung 86. Diese umfasst ein stationäres Teil 87, an dem nicht weiter abgebildete Schleifkontakte angebracht sind, die über im Energieeinspeiseblock 35 verlaufende elektrische Leitungen 88 mit den Anschlusskontakten 76 fest verbunden sind. Außerdem verfügt die Signalübertragungseinrichtung 86 über einen bezüglich dem stationären Teil 87 drehbaren Rotor 92 der mit nicht weiter abgebildeten Schleifringen verstehen ist, die zum einen fest mit den elektrischen Signalleitern 82 verbunden sind und an denen zum anderen die erwähnten Schleifkontakte gleitfähig anliegen.

Der Rotor 92 ist drehfest mit der Energieübertragungsstange 38 verbunden. Dies geschieht beim Ausführungsbeispiel mittels einer reibschlüssigen Verbindung, indem ein ortsfest mit dem Rotor 92 verbundener Mitnehmerfortsatz 93 in den Anschlagring 47 eingepresst ist. Der Mitnehmerfortsatz 93 ist beispielsweise ein verdickter Längenabschnitt des Signalübertragungskabels 83.

Bei einer Rotation der Hohlwelle 14 rotiert der mindestens eine Signalabgabeanschluss 17 um die Hauptachse 14 herum mit. In gleicher Weise dreht sich das Signalübertragungskabel 83 zusammen mit dem Rotor 92. Bei der Rotation des Rotors 92 gleiten dessen Schleifringe an den mit den Anschlusskontakten 76 verbundenen Schleifkontakten ab, so dass unabhängig von der Drehposition eine zuordnungsrichtige elektrische Verbindung gegeben ist.

Der Energieeinspeiseblock 35 ist zweckmäßigerweise modular aufgebaut. Der mindestens eine signaleingangsanschluss 75 ist an einem bezüglich dem Befestigungsabschnitt 36 gesonderten weiteren Befestigungsabschnitt 94 angeordnet, der die Signalübertragungseinrichtung 86 beinhaltet und der, sofern eine elektrische Signaldurchführung gewünscht ist - rückseitig an das Befestigungsteil 36 angebaut werden kann.

Die Drehvorrichtung 1 ermöglicht also je nach Ausstattung außer einer rein fluidischen Energiedurchführung auch eine kombiniert fluidisch und elektrische Energiedurchführung. Auch besteht die Möglichkeit, lediglich die elektrische Energiedurchführung zu nutzen.

Für alle Ausführungsbeispiele gilt, dass der Fluidverteilerkopf 68 in der axialen Ausnehmung 73 des Schnittstellenkörpers 3 zentriert aufgenommen sein kann. Zur Vermeidung von Überbestimmungen und insbesondere einer Überbeanspruchung der im Bereich des Energieeinspeiseblockes 35 vorhandenen Drehlagerungseinrichtung, kann an dieser Stelle allerdings auch auf eine radiale Abstützung verzichtet werden, so dass die Energieübertragungsstange 38 an ihrem vorderen Ende frei fliegend endet und keiner Querbeanspruchung unterliegt.

## Patentansprüche

1. Drehvorrichtung, mit einem Gehäuse (7), das von einer zur Gehäuserückseite (12) und zur Gehäusevorderseite (13) ausmündenden Hohlwellenaufnahme (8) durchsetzt ist, in der sich eine bezüglich dem Gehäuse (7) drehbar und axial unbeweglich gelagerte, rotativ antreibbare Hohlwelle (14) erstreckt, wobei an der Gehäuserückseite (12) im Betriebszustand ein mindestens einen Fluideinspeiseanschluss (27) aufweisender Energieeinspeiseblock (35) befestigt ist, in den eine drehbare Energieübertragungsstange (38) hineinragt, die axial von mindestens einem Fluidübertragungskanal (48) durchsetzt ist, der unabhängig von der bezüglich dem Energieeinspeiseblock (35) eingenommenen Drehposition der Energieübertragungsstange (38) innerhalb des Energieeinspeiseblockes (35) mit dem mindestens einen Fluideinspeiseanschluss (27) in Fluidverbindung steht, wobei die Energieübertragungsstange (38) im Betriebszustand drehfest mit der Hohlwelle (14) verbunden ist und sich koaxial in der Hohlwelle (14) erstreckt, und wobei der mindestens eine Fluidübertragungskanal (48) mit einem im Bereich der Gehäusevorderseite (13) angeordneten, im Betriebszustand mitdrehbar mit der Hohlwelle (14) verbundenen Fluidabgabeanschluss (28) kommuniziert, **dadurch gekennzeichnet, dass** die Energieübertragungsstange (38) in dem Energieeinspeiseblock (35) drehbar und außerdem axial unbewegbar gelagert ist und gemeinsam mit dem Energieeinspeiseblock (35) Bestandteil einer Energiedurchführungspatrone (34) ist, die als vormontierte Baueinheit von der Gehäuserückseite (12) her derart an das Gehäuse (7) ansetzbar ist, dass die Energieübertragungsstange (38) im Betriebszustand in die Hohlwelle (14) eintaucht.

2. Drehvorrichtung nach Anspruch 1, **dadurch gekennzeichnet, dass** der Energieeinspeiseblock (35) einen an der Gehäuserückseite (12) fixierten Befestigungsabschnitt (36) aufweist, von dem ein koaxial in die Hohlwelle (14) eintauchender, die Energieübertragungsstange (38) entlang eines Längenabschnittes umschließender Halsabschnitt (67) wegragt.

3. Drehvorrichtung nach Anspruch 2, **dadurch gekennzeichnet, dass** in der Wandung des Halsabschnittes (67) mindestens ein mit dem mindestens einen Fluideinspeiseanschluss (27) kommunizierender Fluideinspeisekanal (58) verläuft, der im Bereich des Halsabschnittes (67) mit einem Fluidübertragungskanal (48) der Energieübertragungsstange (38) kommuniziert.

4. Drehvorrichtung nach einem der Ansprüche 1 bis 3, **dadurch gekennzeichnet, dass** in der Energieübertragungsstange (38) mehrere axial verlaufende Fluidübertragungskanäle (48) ausgebildet sind, die jeweils einerseits mit einem eigenen Fluideinspeiseanschluss (27) des Energieeinspeiseblockes (35) und andererseits mit einem eigenen Fluidabgabeanschluss (28) im Bereich der Gehäusevorderseite (13) kommunizieren.

5. Drehvorrichtung nach einem der Ansprüche 1 bis 4, **dadurch gekennzeichnet, dass** die Energieübertragungsstange (38) über Wälzlagermittel (44) im Energieeinspeiseblock (35) drehgelagert ist, wobei diese Wälzlagermittel (44) zweckmäßigerweise auch zur bezüglich dem Energieeinspeiseblock (35) axial unbeweglichen Abstützung der Energieübertragungsstange (38) dienen.

6. Drehvorrichtung nach einem der Ansprüche 1 bis 5, **dadurch gekennzeichnet, dass** die Energieübertragungsstange (38) als stranggepresstes Hohlprofilelement ausgebildet ist, das von mehreren Fluidübertragungskanälen (48) axial durchzogen ist, deren Verbindung zum jeweils zugeordneten Fluideinspeiseanschluss (27) und Fluidabgabeanschluss (28) mittels jeweils einer zum Außenumfang der Energieübertragungsstange (38) ausmündenden Querbohrung (56, 62) hergestellt ist und die stirnseitig zweckmäßigerweise durch ein axial angedrücktes und insbesondere durch einen umgebördelten Endbereich der Energieübertragungsstange (38) fixiertes Dichtelement (53) fluiddicht verschlossen sind.

7. Drehvorrichtung nach einem der Ansprüche 1 bis 6, **dadurch gekennzeichnet, dass** die Energieübertragungsstange (38) an ihrem dem Energieeinspeiseblock (35) entgegengesetzten vorderen Endabschnitt einen insbesondere koaxial aufgesetzten Fluidverteilerkopf (68) trägt, an dem seitlich der mindestens eine Fluidabgabeanschluss (28) angeordnet ist und der zweckmäßigerweise ein Bestandteil der Energiedurchführungspatrone (34) ist.

8. Drehvorrichtung nach Anspruch 7, **dadurch gekennzeichnet, dass** der mindestens eine Fluidabgabeanschluss (28) an einer seitlich von dem Fluidverteilerkopf (68) wegragenden Fluidleitungs-Anschlussvorrichtung (33) ausgebildet ist.

9. Drehvorrichtung nach einem der Ansprüche 1 bis 8, **dadurch gekennzeichnet, dass** an der Vorderseite der Hohlwelle (14) ein eine zur Befestigung einer rotativ anzutreibenden Komponente (6) dienende Befestigungsschnittstelle (2) aufweisender eigenständiger Schnittstellenkörper (3) angebracht ist, insbesondere mittels einer Schraubverbindung.

10. Drehvorrichtung nach Anspruch 9 in Verbindung mit Anspruch 8, **dadurch gekennzeichnet, dass** der Schnittstellenkörper (3) zusammen mit der mindestens einen Fluidleitungs-Anschlussvorrichtung (33) eine Drehmitnahmeeinrichtung bildet, durch die die Energieübertragungsstange (38) drehfest mit der Hohlwelle (14) verbunden ist.

11. Drehvorrichtung nach einem der Ansprüche 1 bis 10, **dadurch gekennzeichnet, dass** der Fluidverteilerkopf (68) in eine axiale Ausnehmung (73) des Schnittstellenkörpers (3) eintaucht, wobei der Schnittstellenkörper (3) mindestens eine innen in die Ausnehmung (73) ausmündende radial Durchbrechung (74) aufweist, in die eine im Fluidverteilerkopf (68) fixierte Fluidleitungs-Anschlussvorrichtung (33) hineinragt, um durch Zusammenwirken mit der Wandung der radialen Durchbrechung (74) eine drehfeste Verbindung zwischen der Hohlwelle (14) und der Energieübertragungsstange (38) hervorzurufen, wobei die mindestens eine radial Durchbrechung zweckmäßigerweise an der der Hohlwelle (14) zugewandten Seite offen ist, um bei montierter mindestens einer Fluidleitungs-Anschlussvorrichtung (33) ein Ansetzen des Schnittstellenkörpers (3) an die Hohlwelle (14) zu ermöglichen.

12. Drehvorrichtung nach einem der Ansprüche 1 bis 11, **dadurch gekennzeichnet, dass** von jedem die Energieübertragungsstange (38) durchziehenden Fluidübertragungskanal (48) innerhalb des Energieeinspeiseblockes (35) eine radiale Querbohrung (56) wegführt, die in eine die Energieübertragungsstange (38) umschließende, mit dem mindestens einen Fluideinspeiseanschluss (27) kommunizierende Ringkammer (57) mündet, wobei die Ringkammer (57) axial von zwei zueinander beabstandeten ringförmigen Dichtelementen (62) begrenzt ist, die zweckmäßigerweise in eine die Energieübertragungsstange (38) koaxial umschließende hohlzylindrische Aufnahme (64) des Energieeinspeiseblockes (35) eingesteckt sind.

13. Drehvorrichtung nach Anspruch 12, **dadurch gekennzeichnet, dass** zur Bildung mehrerer Ringkammern (57) mehrere axial beabstandete ringförmige Dichtelemente (63) um die Energieübertragungsstange (38) herum angeordnet sind.

14. Drehvorrichtung nach einem der Ansprüche 1 bis 13, **dadurch gekennzeichnet, dass** der Energieeinspeiseblock (35) mindestens einen zur Einspeisung elektrischer Signale ausgebildeten Signaleinspeiseanschluss (75) aufweist, dessen Anschlusskontakte (76) über eine in dem Energieeinspeiseblock (35) angeordnete Signalübertragungseinrichtung (86) unabhängig von der Drehposition der Energieübertragungsstange (38) mit axial durch die Energieübertragungsstange (38) hindurchgeführten elektrischen Signalleitern (82) elektrisch verbunden sind, wobei die elektrischen Signalleiter (82) zu Anschlusskontakten (78) mindestens eines im Bereich der Gehäusevorderseite (13) angeordneten, mitdrehbar mit der Hohlwelle (14) verbundenen Signalabgabeanschlusses (77) führen.

15. Drehvorrichtung nach Anspruch 14, **dadurch gekennzeichnet, dass** die elektrischen Signalleiter (82) durch einen zentral in der Energieübertragungsstange (38) verlaufenden Durchgangskanal (52) hindurchgeführt sind, um den herum verteilt in der Wandung der Energieübertragungsstange (38) mehrere Fluidüberragungskanäle (48 verlaufen.

16. Drehvorrichtung nach einem der Ansprüche 1 bis 15, **dadurch gekennzeichnet, dass** an oder in dem Gehäuse (7) Antriebsmittel (18) für den rotativen Antrieb der Hohlwelle (14) angeordnet sind.

## Claims

1. Turning device with a housing (7) through which passes a hollow shaft receptacle (8) terminating towards the rear (12) and the front (13) of the housing, wherein extends a hollow shaft (14) which is rotatable with respect to the housing (7), axially immovable and capable of being driven rotatively, wherein the rear (12) of the housing supports in the operative state an energy supply block (35) with at least one fluid feed port (27), into which projects a rotatable energy transmission rod (38) through which passes axially at least one fluid transmission passage (48) which is in fluid connection with the at least one fluid feed port (27) independent of the rotary position of the energy transmission rod (38) within the energy supply block (35), wherein the energy transmission rod (38) is non-rotatably connected to the hollow shaft (14) in the operative state and extends coaxially within the hollow shaft (14), and wherein the at least one fluid transmission passage (48) communicates with a fluid delivery port (28) provided in the region of the front (13) of the housing and connected for rotation with the hollow shaft (14) in the operative state, **characterised in that** the energy transmission rod (38) is mounted rotatably and furthermore axially immovably in the energy supply block (35) and forms together with the energy supply block (35) a part of an energy lead-through cartridge (34) which, as a pre-assembled unit, can be fitted to the housing (7) from its rear (12) in such a way that the energy transmission rod (38) dips into the hollow shaft (14) in the operative state.

2. Turning device according to claim 1, **characterised in that** the energy supply block (35) has a mounting section (36) attached to the rear (12) of the housing, from where projects a neck section (67) dipping into the hollow shaft (14) and enclosing the energy transmission rod (38) along a section of its length.

3. Turning device according to claim 2, **characterised in that** at least one fluid feed passage (58) communicating with the at least one fluid feed port (27) extends in the wall of the neck section (67) and communicates in the region of the neck section (67) with a fluid transmission passage (48) of the energy transmission rod (38).

4. Turning device according to any of claims 1 to 3, **characterised in that** a plurality of axially oriented fluid transmission passages (48) is formed in the energy transmission rod (38), each of which communicates with its own fluid supply port (27) of the energy supply block (35) at one end and with its own fluid delivery port (28) in the region of the front (13) of the housing at the other end.

5. Turning device according to any of claims 1 to 4, **characterised in that** the energy transmission rod (38) is rotatably mounted in the energy supply block (35) by rolling bearing means (44), wherein the rolling bearing means (44) are expediently also used for supporting the energy transmission rod (38) so that it is axially immovable with respect to the energy supply block (35).

6. Turning device according to any of claims 1 to 5, **characterised in that** the energy transmission rod (38) is designed as an extruded hollow section element through which a plurality of fluid transmission passages (48) passes axially, each of which is connected to the associated fluid supply port (27) and fluid delivery port (28) by means of a cross-hole (56, 62) terminating towards the outer circumference of the energy transmission rod (38), and the end faces of which are expediently closed in a fluid-tight manner by an axially pressed-on sealing element (53) which is in particular fixed by means of a flanged end region of the energy transmission rod (38).

7. Turning device according to any of claims 1 to 6, **characterised in that** the energy transmission rod (38) supports on its front end section opposite the energy supply block (35) an in particular coaxially mounted fluid distribution head (68) on which the at least one fluid delivery port (28) is laterally mounted and which expediently forms a part of the energy lead-through cartridge (34).

8. Turning device according to claim 7, **characterised in that** the at least one fluid delivery port (28) is formed on a fluid line connecting device (33) which projects laterally from the fluid distribution head (68).

9. Turning device according to any of claims 1 to 8, **characterised in that** an interface body (3) with a mounting interface (2) for a rotatively driven component (6) is attached to the front of the hollow shaft (14), in particular by means of a screw connection.

10. Turning device according to claim 9 in combination with claim 8, **characterised in that** the interface body (3) together with the at least one fluid line connecting device (33) forms a rotary drive device which non-rotatably connects the energy transmission rod (38) to the hollow shaft (14).

11. Turning device according to any of claims 1 to 10, **characterised in that** the fluid distribution head (68) dips into an axial recess (73) of the interface body (3), wherein the interface body (3) has at least one radial opening (74) internally terminating into the recess (73), into which projects a fluid line connecting device (33) fixed in the fluid distribution head (68) in order to provide, by interacting with the wall of the radial opening (74), a non-rotatable connection between the hollow shaft (14) and the energy transmission rod (38), wherein the at least one radial opening is expediently open on the side facing the hollow shaft (14) in order to allow the mounting of the interface body (3) on the hollow shaft (14) after the at least one fluid line connecting device (33) has been installed.

12. Turning device according to any of claims 1 to 11, **characterised in that** a radial cross-hole (56) terminating into an annular chamber (57) enclosing the energy transmission rod (38) and communicating with the at least one fluid feed port (27) leads off each fluid transmission passage (48) extending through the energy transmission rod (38) within the energy supply block (35), wherein the annular chamber (57) is axially bounded by two annular sealing elements (62) arranged at a distance from each other, which are expediently inserted into a hollow-cylindrical receptacle (64) of the energy supply block (35) which coaxially encloses the energy transmission rod (38).

13. Turning device according to claim 12, **characterised in that** a plurality of axially spaced annular sealing elements (63) is arranged around the energy transmission rod (38) to form a plurality of annular chambers (57).

14. Turning device according to any of claims 1 to 13, **characterised in that** the energy supply block (35) comprises at least one signal input port (75) designed for the input of electric signals, the termination contacts (76) of which are electrically connected to electric signal conductors (82) routed axially through the energy transmission rod (38) via a signal transmission device (86) disposed in the energy supply block (35) independent of the rotary position of the energy transmission rod (38), wherein the electric signal conductors (82) lead to connecting contacts (78) of at least one signal output port (77) disposed in the region of the front (13) of the housing and connected for rotation with the hollow shaft (14).

15. Turning device according to claim 14, **characterised in that** the electric signal conductors (82) are routed through a through-channel (52) extending centrally through the energy transmission rod (38), around which a plurality of fluid transmission passages (48) are distributed in the wall of the energy transmission rod (38).

16. Turning device according to any of claims 1 to 15, **characterised in that** drive means (18) for the rotative drive of the hollow shaft (14) are provided on or in the housing (7).

## Revendications

1. Dispositif rotatif, comportant un carter (7), à travers lequel passe un logement (8) pour arbre creux, qui débouche vers la face arrière (12) et la face avant (13) du carter et dans lequel est logé un arbre creux (14) pouvant être entraîné en rotation, qui est monté rotatif par rapport au carter (7) et immobile axialement, sachant que, dans la position de service, sur la face arrière (12) du carter est fixé au moins un bloc d'alimentation en énergie (35), qui est muni d'un raccord d'alimentation en fluide (27) et dans lequel s'engage une tige de transfert d'énergie (38) rotative, qui est traversée axialement par au moins un conduit de circulation du fluide (48) qui, indépendamment de la position de rotation de la tige de transfert d'énergie (38) par rapport au bloc d'alimentation en énergie (35) à l'intérieur du bloc d'alimentation en énergie (35), est en liaison fluidique avec ledit au moins un raccord d'alimentation en fluide (27), sachant que, dans la position de service, la tige de transfert d'énergie (38) est reliée de manière solidaire en rotation avec l'arbre creux (14) et s'étend coaxialement dans l'arbre creux (14), et ledit au moins un conduit de circulation du fluide (48) communiquant avec un raccord d'évacuation du fluide (28) qui est agencé dans la zone de la face avant (13) du carter et qui, dans la position de service, est apte à tourner conjointement avec l'arbre creux (14), **caractérisé en ce que** la tige de transfert d'énergie (38) est montée rotative dans le bloc d'alimentation en énergie (35) et, en outre, de manière immobile axialement, et, conjointement avec le bloc d'alimentation en énergie (35), est une partie intégrante d'une cartouche de passage d'énergie (34) qui, en tant qu'unité préfabriquée, peut être attachée au carter (7) depuis la face arrière (12) du carter, de telle sorte que, dans la position de service, la tige de transfert d'énergie (38) pénètre dans l'arbre creux (14).

2. Dispositif rotatif selon la revendication 1, **caractérisé en ce que** le bloc d'alimentation en énergie (35) comporte une zone de fixation (36), qui est fixée à la face arrière (12) du carter et à partir de laquelle s'avance en saillie une zone formant un manche (67), pénétrant coaxialement dans l'arbre creux (14) et entourant la tige de transfert d'énergie (38) le long d'un tronçon longitudinal.

3. Dispositif rotatif selon la revendication 2, **caractérisé en ce que** dans la paroi du manche (67) s'étend au moins un conduit d'alimentation en fluide (58), qui communique avec le raccord d'alimentation en fluide (27) et qui, dans la zone du manche (67), communique avec un conduit de circulation du fluide (48) de la tige de transfert d'énergie (38).

4. Dispositif rotatif selon l'une quelconque des revendications 1 à 3, **caractérisé en ce que** dans la tige de transfert d'énergie (38) sont réalisés plusieurs conduits de circulation du fluide (48), orientés axialement, qui communiquent, d'une part, avec un propre raccord d'alimentation en fluide (27) du bloc d'alimentation en énergie (35) et, d'autre part, avec un propre raccord d'évacuation du fluide (28) dans la zone de la face avant (13) du carter.

5. Dispositif rotatif selon l'une quelconque des revendications 1 à 4, **caractérisé en ce que** la tige de transfert d'énergie (38) est montée rotative dans le bloc d'alimentation en énergie (35) par l'intermédiaire de moyens de palier à roulements (44), lesdits moyens de palier à roulements (44) étant également destinés, de manière judicieuse, à former un appui, immobile axialement par rapport au bloc d'alimentation en énergie (35), pour la tige de transfert d'énergie (38).

6. Dispositif rotatif selon l'une quelconque des revendications 1 à 5, **caractérisé en ce que** la tige de transfert d'énergie (38) est réalisée sous la forme d'un élément profilé creux extrudé, qui est traversé axialement par plusieurs conduits de circulation du fluide (48), dont la liaison avec le raccord d'alimentation en fluide (27) et le raccord d'évacuation du fluide (28), respectivement associé, est établie dans chaque cas par une forure transversale (56, 62) débouchant vers le pourtour extérieur de la tige de transfert d'énergie (38), et lesquels sont judicieusement fermés de manière étanche au fluide du côté frontal par un élément d'étanchéité (53) pressé axialement contre lesdits conduits et, en particulier, fixé par une zone d'extrémité rabattue de la tige de transfert d'énergie (38).

7. Dispositif rotatif selon l'une quelconque des revendications 1 à 6, **caractérisé en ce que** la tige de transfert d'énergie (38), au niveau de son tronçon d'extrémité avant opposé au bloc d'alimentation en énergie (35), porte une tête de distribution du fluide (68) montée en particulier coaxialement, sur laquelle est agencé latéralement ledit au moins un raccord d'évacuation du fluide (28) et qui, judicieusement, est une partie intégrante de la cartouche de passage d'énergie (34).

8. Dispositif rotatif selon la revendication 7, **caractérisé en ce que** ledit au moins un raccord d'évacuation du fluide (28) est réalisé sur un dispositif de raccordement (33) de la conduite de fluide, formant une saillie latérale sur la tête de distribution du fluide (68).

9. Dispositif rotatif selon l'une quelconque des revendications 1 à 8, **caractérisé en ce que** sur le côté avant de l'arbre creux (14) est monté, en particulier au moyen d'un assemblage vissé, un corps d'interface (3) autonome, muni d'une interface de fixation (2) destinée à la fixation d'un composant (6) à entraîner en rotation.

10. Dispositif rotatif selon la revendication 9 en association avec la revendication 8, **caractérisé en ce que** le corps d'interface (3), conjointement avec ledit au moins un dispositif de raccordement (33) de la conduite de fluide, forme un dispositif d'entraînement en rotation, par lequel la tige de transfert d'énergie (38) est reliée de manière solidaire en rotation à l'arbre creux (14).

11. Dispositif rotatif selon l'une quelconque des revendications 1 à 10, **caractérisé en ce que** la tête de distribution du fluide (68) pénètre dans un évidement (73) axial du corps d'interface (3), ledit corps d'interface (3) comportant au moins un passage (74) radial, qui débouche dans l'évidement (73) et dans lequel s'engage un dispositif de raccordement (33) de la conduite de fluide, fixé à la tête de distribution du fluide (68), afin de réaliser, par coopération avec la paroi du passage (74) radial, une liaison solidaire en rotation entre l'arbre creux (14) et la tige de transfert d'énergie (38), sachant que, judicieusement, ledit au moins un passage radial est ouvert sur le côté orienté vers l'arbre creux (14), afin de permettre la mise en place du corps d'interface (3) sur l'arbre creux (14) lorsque ledit au moins un dispositif de raccordement (33) de la conduite de fluide est monté.

12. Dispositif rotatif selon l'une quelconque des revendications 1 à 11, **caractérisé en ce que**, à partir de chaque conduit de circulation du fluide (48), passant à travers la tige de transfert d'énergie (38), part à l'intérieur du bloc d'alimentation en énergie (35) une forure transversale (56) radiale, qui débouche dans une chambre annulaire (57), entourant la tige de transfert d'énergie (38) et communiquant avec ledit au moins un raccord d'alimentation en fluide (27), ladite chambre annulaire (57) étant délimitée axialement par deux éléments d'étanchéité (62) annulaires écartés l'un de l'autre, qui, judicieusement, sont enfichés dans un logement (64) cylindrique creux du bloc d'alimentation en énergie (35), lequel entoure coaxialement la tige de transfert d'énergie (38).

13. Dispositif rotatif selon la revendication 12, **caractérisé en ce que** pour former plusieurs chambres annulaires (57), plusieurs éléments d'étanchéité (63) annulaires, écartés les uns des autres, sont disposés autour de la tige de transfert d'énergie (38).

14. Dispositif rotatif selon l'une quelconque des revendications 1 à 13, **caractérisé en ce que** le bloc d'alimentation en énergie (35) comporte au moins un branchement d'admission de signaux (75), réalisé pour l'injection de signaux électriques, dont les contacts de branchement (76) sont reliés électriquement via un dispositif de transmission des signaux (86), agencé dans le bloc d'alimentation en énergie (35), indépendamment de la position de rotation de la tige de transfert d'énergie (38), avec des lignes de transmission de signaux (82) électriques, guidées axialement à travers la tige de transfert d'énergie (38), lesdites lignes de transmission de signaux (82) électriques menant vers les contacts de branchement (78) d'au moins un branchement de sortie de signaux (77), agencé dans la zone de la face avant (13) du carter et relié de manière à pouvoir tourner conjointement avec l'arbre creux (14).

15. Dispositif rotatif selon la revendication 14, **caractérisé en ce que** les lignes de transmission de signaux (82) électriques sont guidées à travers un conduit (52), qui s'étend centralement dans la tige de transfert d'énergie (38) et autour duquel s'étendent plusieurs conduits de circulation du fluide (48) répartis dans la paroi de la tige de transfert d'énergie (38).

16. Dispositif rotatif selon l'une quelconque des revendications 1 à 15, **caractérisé en ce que** des moyens d'entraînement (18) pour l'entraînement en rotation de l'arbre creux (14) sont agencés sur ou dans le carter (7).
